# EUROPEAN PATENT APPLICATION

(11) **EP 4 269 973 A1**
(43) Date of publication of application: **01.11.2023**
(21) Application number: 21909900.9
(22) Date of filing: 12.10.2021
(51) Int. Cl.: G01L 19/00

(54) **PRESSURE SENSOR**

(30) Priority: 23.12.2020 JP 2020214204
(71) Applicant: Saginomiya Seisakusho, Inc., Tokyo 165-0033 (JP)
(72) Inventor: TAKIMOTO, Kazuya, Sayama-shi, Saitama 350-1395 (JP); NAKAMURA, Takeshi, Sayama-shi, Saitama 350-1395 (JP)
(74) Representative: Regimbeau
(86) International application number: PCT/JP2021/037797
(87) International publication number: WO 2022/137742

(57) **Abstract**

A strip-shaped shielding member 20 includes: a shield portion 20A positioned directly above a signal processing electronic circuit unit of a sensor chip 16 placed in a concaved chip mounting portion of a sensor chip/terminal supporting member 14; a fixed end portion 20B continuing to one end of the shield portion 20A and fixed to the sensor chip/terminal supporting member 14; and a fixed end portion 20C continuing to the other end of the shield portion 20A and fixed to the sensor chip/terminal supporting member 14, in which the shield portion 20A is placed in a position that is between one ends of multiple bonding wires Wi connected to the sensor chip 16 and opposed to each other so as to correspond in a width direction of the shield portion 20A and is closer to a surface of the sensor chip 16 than positions of curved portions of the bonding wires Wi.

## Description

### Technical Field

The present invention relates to a pressure sensor.

### Background Art

As shown in PTL 1, for example, a sensor unit constituted in a liquid seal type semiconductor pressure sensor comprises, as its main constituents: a metallic diaphragm configured to isolate a pressure chamber communicating with a port of a joint member from a liquid sealing chamber to be described later; the liquid sealing chamber formed above the metallic diaphragm in an inner peripheral portion of a cylindrical housing and configured to trap a silicone oil serving as a pressure transfer medium; a sensor chip placed inside the liquid sealing chamber and configured to detect a pressure fluctuation of the silicone oil through the metallic diaphragm; a sensor chip mounting member configured to support the sensor chip; a hermetic glass sealing a portion around the sensor chip mounting member in the inner peripheral portion of the above-described housing; and a group of input-output terminals fixed by the hermetic glass and configured to send an output signal from the sensor chip and to supply power to the sensor chip.

In a configuration as described above, as shown in Fig. 1 in PTL 1, a shielding member is additionally disposed inside the liquid sealing chamber so as to block an undesirable electric field in a signal processing electronic circuit unit of the sensor chip. A given clearance is formed between a portion covering the entire sensor chip in the shielding member having a portal-shaped cross-section and an end surface of the sensor chip. Two fixed end portions in the shielding member having the portal-shaped cross-section are joined to be close to an outer peripheral portion of the sensor chip on one end surface of a disc-shaped conductive plate and are conductive. Potentials of the shielding member and the conductive plate are the same potentials as that of the electronic circuit mounted in the sensor chip.

In this configuration, since it is a configuration in which the shielding member having the portal-shaped cross-section covers the entire sensor chip, a volume inside the liquid sealing chamber is relatively great, and a volume of the silicone oil that can be filled in the liquid sealing chamber may be relatively great. In such a case, there is a risk of a change in the output characteristics of the pressure sensor due to a change in the metallic diaphragm caused by expansion and contraction of the silicone oil based on a change in the ambient temperature. To deal with this, as shown in PTL 2, for example, a ring-shaped member joined to the conductive plate is disposed inside the liquid sealing chamber so as to make the volume of the silicone oil filled in the liquid sealing chamber relatively small and to suppress a change in the output characteristics of the pressure sensor due to a change in the metallic diaphragm caused by expansion and contraction of the silicone oil based on a change in the ambient temperature. That is, the shielding member and the ring-shaped member allow the volume of the silicone oil filled in the liquid sealing chamber to be smaller than the entire inner volume of the liquid sealing chamber formed by the inner peripheral portion of the housing in which no ring-shaped member is placed.

### Citation List

### Patent Literature

PTL 1: Japanese Patent Laid-Open No. 2019-100807
PTL 2: Japanese Patent Laid-Open No. 2019-100808
PTL 3: Japanese Patent Laid-Open No. 2017-194401

### Summary of Invention

### Technical Problem

There has been demanded to further reduce the volume of the silicone oil filled in the above-described liquid sealing chamber to further suppress a change in the output characteristics of the pressure sensor due to a change in the ambient temperature.

However, as shown in PTL 1, in a configuration in which the fixed end portion of the shielding member placed inside the liquid sealing chamber is fixed to the end surface of the conductive plate supported by the one end surface of the hermetic glass, the liquid sealing chamber needs to be deep because it is a structure in which the entire sensor chip is covered with the shielding member from above a bonding wire, and there is a tendency that a space volume inside the liquid sealing chamber is great. Additionally, since the structures shown in PTL 1 and PTL 2 require the conductive plate configured to fix the shielding member, and also the liquid sealing chamber needs to be deep, there is a limit to further decrease an inner dimension along an axial direction of the input-output terminal in the liquid sealing chamber while securing the given clearance between the metallic diaphragm and the shielding member.

Taking into consideration the above problems, an object of the present invention is to provide a pressure sensor that comprises a shielding member disposed inside a liquid sealing chamber so as to block an undesirable electric field in a signal processing electronic circuit unit of a sensor chip and that also can further reduce a volume of a silicone oil filled in the liquid sealing chamber.

A pressure sensor according to the present invention for solving the above object is a pressure sensor, including: a sensor unit that includes a sensor chip configured to detect a pressure and to send a detection output signal, a diaphragm configured to partition a liquid sealing chamber in which the sensor chip is placed from a pressure chamber opposed to the liquid sealing chamber, a group of input-output terminals electrically connected to the sensor chip through a wiring member, and a sensor chip/terminal support member provided with a chip mounting portion in which the sensor chip is placed and configured to support the sensor chip and the group of input-output terminals; and an electric field blocking member that is provided with a shield portion placed between one end surface of the sensor chip in the liquid sealing chamber and the diaphragm and positioned directly above the sensor chip and a fixed end portion continuing to the shield portion and fixed to the sensor chip/terminal support member and that is configured to block an electric field acting on the sensor chip, in which in the shield portion of the electric field blocking member, at least one end portion along an array direction of a connection end of a wiring member connected to the sensor chip is placed in a position closer to a central portion of the sensor chip than a position directly above the wiring member.

A pressure sensor according to the present invention is a pressure sensor, including: a sensor unit that includes a sensor chip configured to detect a pressure and to send a detection output signal, a diaphragm configured to partition a liquid sealing chamber in which the sensor chip is placed from a pressure chamber opposed to the liquid sealing chamber, a group of input-output terminals electrically connected to the sensor chip, and a sensor chip/terminal support member provided with a chip mounting portion in which the sensor chip is placed and configured to support the sensor chip and the group of input-output terminals; and an electric field blocking member that is provided with a shield portion placed between one end surface of the sensor chip in the liquid sealing chamber and the diaphragm and positioned directly above the sensor chip and a fixed end portion continuing to the shield portion and fixed to the sensor chip/terminal support member and that is configured to block an electric field acting on the sensor chip, in which the diaphragm is provided with a portion opposed to the shield portion of the electric field blocking member and is formed such that concavity and convexity formed concentrically to continue to two ends of the portion opposed to the shield portion protrude toward the sensor chip/terminal support member.

A pressure sensor according to the present invention is a pressure sensor, including: a sensor unit that includes a sensor chip configured to detect a pressure and to send a detection output signal, a diaphragm configured to partition a liquid sealing chamber in which the sensor chip is placed from a pressure chamber opposed to the liquid sealing chamber, a group of input-output terminals electrically connected to the sensor chip, and a sensor chip/terminal support member provided with a chip mounting portion in which the sensor chip is placed and configured to support the sensor chip and the group of input-output terminals; and an electric field blocking member that is provided with a shield portion placed between one end surface of the sensor chip in the liquid sealing chamber and the diaphragm and positioned directly above the sensor chip and a fixed end portion continuing to the shield portion and fixed to the sensor chip/terminal support member and that is configured to block an electric field acting on the sensor chip, in which a position of an outer edge of the diaphragm is closer to an end portion of the sensor chip/terminal support member inside the liquid sealing chamber than a position of a portion opposed to one end surface of the sensor chip. The chip mounting portion may be formed into a concaved shape at an end portion of the sensor chip/terminal support member.

A conductive pattern may be formed on an end surface of the sensor chip/terminal support member, the group of input-output terminals may be electrically connected with the conductive pattern, and each fixed end portion of the electric field blocking member may be fixed to the conductive pattern.

A pressure sensor according to the present invention is a pressure sensor, including: a sensor unit that includes a sensor chip configured to detect a pressure and to send a detection output signal, a diaphragm configured to partition a liquid sealing chamber in which the sensor chip is placed from a pressure chamber opposed to the liquid sealing chamber, and a group of input-output terminals electrically connected to the sensor chip; a spacer member placed so as to surround the sensor chip in the liquid sealing chamber; and an electric field blocking member that is placed between one end surface of the sensor chip in the liquid sealing chamber and the diaphragm by being supported by the spacer member and that is configured to block an electric field acting on the sensor chip, in which a potential of the electric field blocking member is the same potential as a potential of any one of input-output terminals out of the group of input-output terminals.

The electric field blocking member may be provided with at least one opening that allows for communication between a portion formed between the diaphragm and the electric field blocking member in the liquid sealing chamber and a portion surrounded by the electric field blocking member in the inner peripheral portion of the spacer member, or between an inner side of the spacer member and a portion formed between the diaphragm and the electric field blocking member.

According to the pressure sensor of the present invention, since at least one end portion along the array direction of the connection end of the wiring member connected to the sensor chip in the shield portion of the electric field blocking member is placed in the position closer to the central portion of the sensor chip than the position directly above the connection end of the wiring member, it is possible to provide inside the liquid sealing chamber the electric field blocking member serving as a shielding member so as to block an undesirable electric field in a signal processing electronic circuit unit of the sensor chip, and also it is possible to further reduce a volume of a silicone oil filled in the liquid sealing chamber. As a result, it is possible to reduce a substantially filled volume of the silicone oil, that is, a sealed amount of a pressure transfer medium such as the silicone oil, and thus it is possible to suppress a change in the output characteristics of the pressure sensor due to a change in a displacement amount of the metallic diaphragm caused by expansion and contraction of the silicone oil based on a change in the ambient temperature, and it is possible to improve the temperature characteristics in output by the pressure sensor.

### Brief Description of Drawings

[Fig. 1A] Fig. 1A is a partial cross-sectional view showing, together with ajoint member, a main portion of a sensor unit used in an example of a pressure sensor according to the present invention.
[Fig. 1B] Fig. 1B is a diagram of an electric field blocking member placed inside a liquid sealing chamber that is viewed from a direction indicated with an arrow IB shown in Fig. 1A.
[Fig. 2] Fig. 2 is a cross-sectional view showing, together with the main portion of the sensor unit, another example of a diaphragm used in the sensor unit shown in Fig. 1A.
[Fig. 3A] Fig. 3A is a cross-sectional view showing, together with the main portion of the sensor unit, yet another example of the diaphragm used in the sensor unit shown in Fig. 1A.
[Fig. 3B] Fig. 3B is a cross-sectional view showing, together with the main portion of the sensor unit, yet another example of the diaphragm used in the sensor unit shown in Fig. 1A.
[Fig. 4A] Fig. 4A is a partial cross-sectional view showing an example of a chip mounting portion of a sensor chip/terminal supporting member.
[Fig. 4B] Fig. 4B is a partial cross-sectional view showing an example of a chip mounting portion of a sensor chip/terminal supporting member.
[Fig. 4C] Fig. 4C is a partial cross-sectional view showing an example of a chip mounting portion of a sensor chip/terminal supporting member.
[Fig. 5A] Fig. 5A is a cross-sectional view showing a main portion of a sensor unit used in another example of the pressure sensor according to the present invention.
[Fig. 5B] Fig. 5B is a diagram of an electric field blocking member placed inside a liquid sealing chamber that is viewed from a direction indicated with an arrow VB shown in Fig. 5A.
[Fig. 6A] Fig. 6A is a cross-sectional view showing a main portion of a sensor unit used in yet another example of the pressure sensor according to the present invention.
[Fig. 6B] Fig. 6B is a diagram of an electric field blocking member placed inside a liquid sealing chamber that is viewed from a direction indicated with an arrow VIB shown in Fig. 6A.

### Description of Embodiments

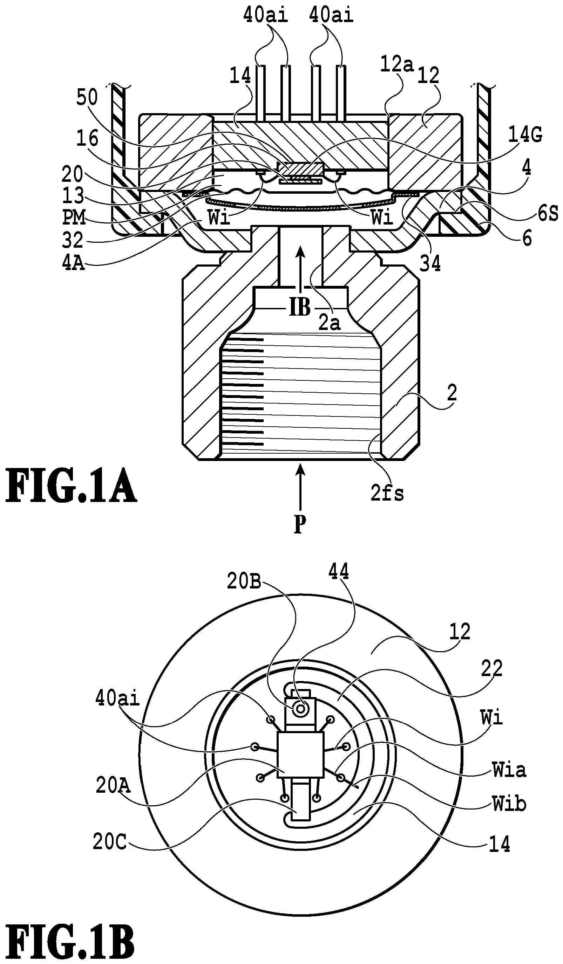

Fig. 1A and Fig. 1B show a main portion of a sensor unit used in an example of a pressure sensor according to the present invention.

The pressure sensor comprises, for example, as shown in PTL 1, a joint member 2 connected to a pipe to which a fluid being a target of pressure detection is introduced, and a sensor unit accommodating portion connected to a base plate 4 of the joint member 2 by brazing and the like and configured to accommodate a sensor unit to be described later and to supply a detection output signal from a sensor chip to a given pressure measurement device.

As shown in Fig. 1A, the metallic joint member 2 is provided in its inside with a female screw portion 2fs to be threadedly engaged with a male screw portion on a connecting portion of the above-described pipe. The female screw portion 2fs communicates with a port 2a of the joint member 2, which guides the fluid supplied from a direction indicated with an arrow P into a pressure chamber 4A to be described later. One of open ends of the port 2a is open toward the pressure chamber 4A, which is formed between the base plate 4 of the joint member 2 and a diaphragm 32 of the sensor unit.

A contour of the sensor unit accommodating portion is formed from a cylindrical waterproof casing 6 serving as a cover member. An opening is formed at a lower end portion of the waterproof casing 6 made of a resin. A peripheral edge of the base plate 4 of the joint member 2 is engaged with a stepped portion 6S at a peripheral edge of the opening located inside. A pressure of the fluid is introduced into the pressure chamber 4A through the port 2a of the j oint member 2. A lower end surface of a housing 12 of the sensor unit is connected to the peripheral edge of the base plate 4 by welding.

As shown in Fig. 1A, the sensor unit that detects a pressure inside the pressure chamber 4A formed between the base plate 4 and the diaphragm 32 to be described later and sends the detection output signal comprises, as its main constituents: the metallic cylindrical housing 12; the metallic diaphragm 32 that isolates the above-described pressure chamber 4A from an inner peripheral portion of the housing 12; a sensor chip 16 provided with multiple pressure detection elements and a signal processing electronic circuit unit configured to process a signal from the pressure detection elements; and a sensor chip/terminal supporting member 14 that supports the sensor chip 16 inside a concaved chip mounting portion 14G through an adhesive layer 50 and also fixes a group of input-output terminals 40ai (i=1 to 8) electrically connected to the sensor chip 16 and an oil filling pipe 44 (see Fig. 1B) to the inner peripheral portion of the housing 12.

The diaphragm 32 is supported by the lower end surface on one side of the housing 12, which is the surface opposed to the above-described pressure chamber 4A. A diaphragm protection cover 34 placed in the pressure chamber 4A and configured to protect the diaphragm 32 is provided with multiple communication holes. A peripheral edge of the diaphragm protection cover 34 is joined by welding, together with the peripheral edge of the diaphragm 32, to the lower end surface of the housing 12. The housing 12, the diaphragm 32, the above-described base plate 4, and the joint member 2 have the same potentials as each other because they are connected with each other and conductive. Additionally, the group of input-output terminals 40ai is held while being insulated from the housing 12 with the sensor chip/terminal supporting member 14 (insulator) arranged therebetween. For example, the sensor chip/terminal supporting member 14 is formed of any one of the materials, a resin material such as PPS and POE, hermetic glass, and ceramics.

In a liquid sealing chamber 13 formed between the metallic diaphragm 32 and the sensor chip 16 and an end surface of the sensor chip/terminal supporting member 14 opposed thereto, a prescribed amount of any of a silicone oil and a fluorine-based inert liquid, for example, each of which serves as a pressure transfer medium PM, is filled through the oil filling pipe 44. Note that, one end portion of the oil filling pipe 44 is crushed and blocked up after filling the oil.

The group of input-output terminals 40ai (i = 1 to 8) comprises two power source terminals (one is a GND terminal: a terminal at zero (V)), one output terminal, and five adjustment terminals. Two end portions of each terminal protrude to the liquid sealing chamber 13 from the one end surface portion of the above-described sensor chip/terminal supporting member 14 along a central axis of the sensor chip/terminal supporting member 14, respectively, or protrude outward from the other end surface portion of the sensor chip/terminal supporting member 14, respectively. Note that, only four terminals out of the eight terminals are shown in Fig. 1A. The group of input-output terminals 40ai and the sensor chip 16 to be described later are connected to each other by a bonding wire Wi as a wiring member.

The sensor chip 16 comprises: a semiconductor strain gauge unit provided with, on the top of a silicone diaphragm unit, the multiple pressure detection elements forming a bridge circuit and formed substantially into a rectangular shape by using silicon, for example; an electronic circuit unit formed by integrating an amplifier circuit, a linearity correction circuit, a temperature correction circuit, and a correction data holding circuit formed around the pressure detection elements on an upper end surface of the semiconductor strain gauge unit and processing an output signal of the bridge circuit. Note that, the above-described semiconductor strain gauge unit and the above-described electronic circuit unit may be elements independent from each other.

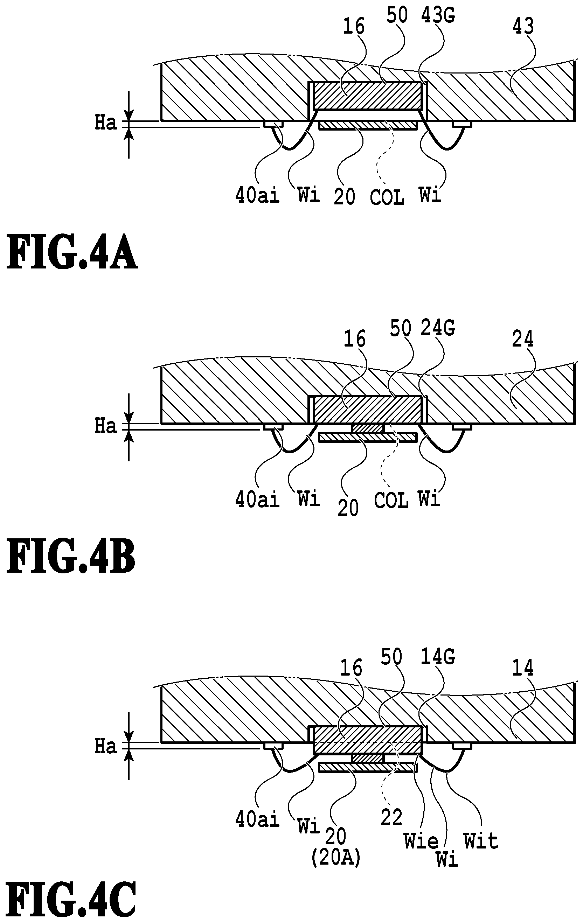

For example, as shown partially enlarged in Fig. 4C, the sensor chip 16 is adhered to a bottom portion of the chip mounting portion 14G in the sensor chip/terminal supporting member 14, which is an inner side of the liquid sealing chamber 13, through the adhesive layer 50. In this case, one end surface of the sensor chip 16 protrudes from the chip mounting portion 14G to the liquid sealing chamber 13 beyond the end surface of the sensor chip/terminal supporting member 14. A depth of the chip mounting portion 14G is set to about around 0.3 mm, for example. A protrusion height Ha of one ends of the group of input-output terminals 40ai connected by the bonding wire Wi protrudes by about around 0.2 mm, for example. Thus, one end surfaces of the group of input-output terminals 40ai are in a position closer to the end surface of the sensor chip/terminal supporting member 14 than the above-described one end surface of the sensor chip 16.

As shown in Fig. 1B, a shielding member 20 serving as an electric field blocking member is disposed between the one end surface of the sensor chip 16 in the liquid sealing chamber 13 and the diaphragm 32. The shielding member 20 is configured to block an undesirable electric field in the signal processing electronic circuit unit of the sensor chip 16. For example, the shielding member 20 is made of a conductive metallic material such as stainless steel, copper, and aluminum into a strip shape.

As shown in Fig. 1B, the strip-shaped shielding member 20 comprises: a shield portion 20A positioned directly above the signal processing electronic circuit unit of the sensor chip 16; a fixed end portion 20B continuing to one end of the shield portion 20A; and a fixed end portion 20C continuing to the other end of the shield portion 20A. A width of the shield portion 20A is set to a slightly smaller dimension than one side of the sensor chip 16. As shown partially enlarged in Fig. 4C, the shield portion 20A is placed between one ends of the multiple bonding wires Wi, which are connected to the sensor chip 16 and opposed to each other so as to correspond in a width direction of the shield portion 20A, and is close to the surface of the sensor chip 16 at a given clearance. The given clearance is, for example, set to at least around 0.1 mm so as to prevent contact between the bonding wire Wi, the sensor chip 16, and the shield portion 20A in the pressure transfer medium PM to be described later.

The mutual positional relationship between the sensor chip/terminal supporting member 14 and each of the shielding member 20, the group of input-output terminals 40ai, and the sensor chip 16 is that a position of the surface of the sensor chip 16 opposed to the shield portion 20A of the shielding member 20 is a position closer to the shield portion 20A than a position of the end surface of the group of input-output terminals 40ai protruding parallel to the central axis of the sensor chip 16 from the end surface of the sensor chip/terminal supporting member 14.

Like PTL 1, conventionally, the shielding member covers the sensor chip 16 to straddle over the bonding wire Wi so as to prevent the shielding member from interfering with the bonding wire Wi wired to the sensor chip 16 from the periphery of the sensor chip 16. In contrast, in the present structure, as shown enlarged in Fig. 4C, a position of the shield portion 20A of the shielding member 20 is placed in a position nearer a central portion of the sensor chip 16 than a top portion Wit of a curved portion of the bonding wire Wi, that is, a position that corresponds to an inner side between the curved portions of the opposed bonding wires Wi and in which the sensor chip 16 is covered. More preferably, a position of an end portion of the shield portion 20A of the shielding member 20 in the width direction is a position distanced to be nearer the central portion of the sensor chip 16 than the top portion Wit of the curved portion of the bonding wire Wi and close to a connection end Wie of the curved portion of the bonding wire Wi.

Thus, the shield portion 20A is placed in a position further closer to the surface of the sensor chip 16 than the position of the top portion Wit of the curved portion of the bonding wire Wi.

Note that, in a case where the bonding wire Wi is wired to the surface of the sensor chip 16 while being formed into a portal shape, the position of the end portion of the shield portion 20A may be placed in a position close to the connection end and distanced to be nearer the central portion of the sensor chip 16 than the top portion positioned directly above the connection end of the bonding wire Wi.

The oil filling pipe 44 is inserted in a hole formed in the fixed end portion 20B. The fixed end portion 20C is soldered and fixed to one end portion of a later-described conductive pattern 22 formed on the end surface of the sensor chip/terminal supporting member 14 so as to be positioned between given two terminals adjacent to each other out of the group of input-output terminals 40ai. The fixed end portion 20B is soldered and fixed to the other end portion of the conductive pattern 22. As shown in Fig. 1B, for example, the conductive pattern 22 having a given film thickness is formed between an array of the one ends of the group of input-output terminals 40ai along a circumferential direction of the sensor chip/terminal supporting member 14 and an inner peripheral portion 12a of the housing 12 by using plating, metalization, or the like along with the array of the one ends of the group of input-output terminals 40ai. The conductive pattern 22 is connected and conductive through a bonding wire Wib connected to any one of the group of input-output terminals 40ai that is the GND terminal (the terminal at zero (V)), for example. The GND terminal is connected to the sensor chip 16 through a bonding wire Wia. Thus, the shielding member 20 has the same potential as a potential of the signal processing electronic circuit mounted in the sensor chip 16. Accordingly, with the shielding member 20 having the same potential as the potential of the sensor chip 16 being placed between the diaphragm 32 and the signal processing electronic circuit unit of the sensor chip 16, an electric field acting on the sensor chip 16 that is generated by a potential difference between the diaphragm 32 having the same potential as that of a primary side power source (not illustrated) of the unit and a control circuit (not illustrated) side is blocked by the shielding member 20. Additionally, since the potential of the shielding member 20 and the potential of the sensor chip 16 are the same potentials, no electric field is generated therebetween. Thus, a potential difference that occurs between the sensor chip 16 and the diaphragm 32 does not act on the sensor chip 16, and therefore it is possible to prevent the effect on the signal processing electronic circuit in the sensor chip 16. Moreover, there is no conductive plate placed inside the liquid sealing chamber 13 as shown in PTL 1 and PTL 2, and also the shield portion 20A of the shielding member 20 is placed in a position further closer to the surface of the sensor chip 16 than the position of the curved portion of the bonding wire Wi. As a result, it is possible to bring the diaphragm 32 further close to the sensor chip 16 placed in the concaved chip mounting portion 14G, and therefore it is possible to make shallower the depth along the central axis of the sensor chip/terminal supporting member 14 in the liquid sealing chamber 13 formed in the inner peripheral portion of the housing 12. Therefore, it is possible to reduce a sealed amount of the pressure transfer medium PM filled in the liquid sealing chamber 13, and thus it is possible to improve the temperature characteristics in output by the pressure sensor. Note that, a similar effect can be obtained merely by at least covering only the semiconductor strain gauge portion of the sensor chip 16 with the shielding member 20 (the shield portion 20A).

In the above-described example, the one end surface of the sensor chip 16 protrudes from the chip mounting portion 14G to the liquid sealing chamber 13 beyond the end surface of the sensor chip/terminal supporting member 14; however, it is not limited to this example and, for example, as shown in Fig. 4B, a depth of a chip mounting portion 24G of a sensor chip/terminal supporting member 24 may be set such that the one end surface of the sensor chip 16 is flush with an end surface of the sensor chip/terminal supporting member 24. The fixed end portion of the shielding member 20 is connected to a conductive pattern COL formed around the chip mounting portion 24G. Therefore, it is possible to make shallower the depth along the central axis of the sensor chip/terminal supporting member 24 in the liquid sealing chamber 13 formed in the inner peripheral portion of the housing 12.

Additionally, as shown in Fig. 4A, a depth of a chip mounting portion 43G of a sensor chip/terminal supporting member 43 may be set such that the position of the one end surface of the sensor chip 16 is lower than an end surface of the sensor chip/terminal supporting member 43 such that the entire sensor chip 16 is buried in the chip mounting portion 43G. Note that, in Fig. 4A, each fixed end portion (not illustrated) of the shielding member 20 is connected to the conductive pattern COL formed around the chip mounting portion 43G of the sensor chip/terminal supporting member 43. That is, each fixed end portion of the shielding member 20 is formed on a plane in common with the shield portion 20A.

Thus, since it is possible to make shallower the depth along the central axis of the sensor chip/terminal supporting member 14 in the liquid sealing chamber 13 formed in the inner peripheral portion of the housing 12 and also it is possible to form the shield portion and the fixed end portion of the shielding member 20 in a common plane, it is possible to simplify the configuration of the shielding member 20. Note that, constituents in Fig. 4A and Fig. 4B that are the same as the constituents in the example shown in Fig. 4C will be denoted by the same reference signs and overlapping descriptions thereof will be omitted.

In the examples shown in Fig. 4A, Fig. 4B, and Fig. 4C, the terminals of the group of input-output terminals 40ai are arrayed at given intervals along a circumferential direction of entire circumference of the sensor chip 16 and are electrically connected to multiple bonding pads formed at each of the two end portions of the sensor chip 16 by using each bonding wire Wi.

It is not limited to this example and, for example, in a case where the group of input-output terminals is arrayed only around one end portion of the sensor chip 16, that is, for example, in a case of being arrayed within a range of 180° around the sensor chip 16, the group of input-output terminals may be electrically connected to the multiple bonding pads formed at only one end portion of the sensor chip 16 by using each bonding wire Wi.

In such a case, as a first modification, for example, in the shield portion of the shielding member that is provided with the fixed end portion to be fixed to the sensor chip/terminal supporting member in one end portion and that is supported as a cantilever, a position of the other end portion facing each bonding pad of the sensor chip 16 may be set to a position as close as possible to the connection end of each bonding wire Wi connected to each bonding pad of the sensor chip 16 without being in contact with the bonding pad.

In addition, as a second modification, in the shield portion of the shielding member along an array direction of each bonding pad of the sensor chip 16, each fixed end portion formed integrally to each short side of the shield portion that is orthogonal to a long side thereof may be fixed to the sensor chip/terminal supporting member, for example. In such a case, in the shield portion of the shielding member, a position of an end portion of the long side of the shield portion of the shielding member facing each bonding pad of the sensor chip 16 may be set to a position as close as possible to the connection end of each bonding wire Wi connected to each bonding pad of the sensor chip 16 without being in contact with each bonding pad.

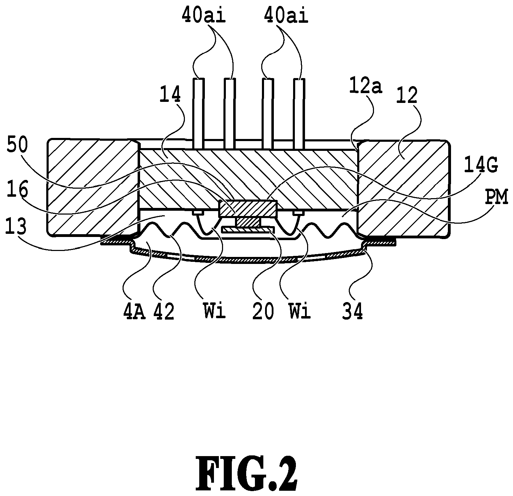

In the example shown in Fig. 1A, concavity and convexity gradually undulating concentrically in a transverse cross-section of the diaphragm 32 are formed relatively small; however, it is not limited to this example and, for example, as shown in Fig. 2, concavity and convexity undulating relatively greatly toward the inside of the liquid sealing chamber 13 may be formed to protrude concentrically around a flat portion opposed to the shield portion 20A of the shielding member 20 in a transverse cross-section of a diaphragm 42. That is, in the concavity and convexity of the diaphragm 42, a protrusion amount to the liquid sealing chamber 13 side is greater than a protrusion amount to the pressure chamber 4A side with respect to a virtual plane formed by an outer peripheral edge of the diaphragm 42. Desirably, the concavity and convexity are formed so as to protrude to the liquid sealing chamber 13 side but not to protrude to the pressure chamber 4A side. A shape of the concavity and convexity of the diaphragm 42 is a shape that does not interfere with each part inside the liquid sealing chamber 13 (the sensor chip, the bonding wire, the group of input-output terminals, the shielding member, and so on) in the protrusion to the liquid sealing chamber 13 side.

Thus, a volume of the pressure transfer medium PM filled in the liquid sealing chamber 13 is reduced more than the volume of the pressure transfer medium PM filled in the liquid sealing chamber 13 in the example shown in Fig. 1A. Note that, constituents in Fig. 2 that are the same as the constituents in the example shown in Fig. 1A will be denoted by the same reference signs and overlapping descriptions thereof will be omitted.

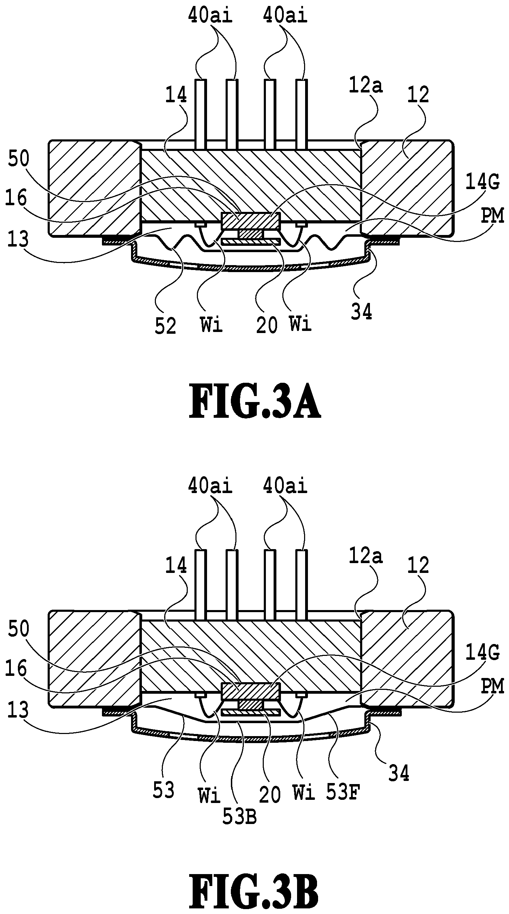

Additionally, for example, as shown in Fig. 3A, a position of an outer peripheral edge of a diaphragm 52 joined to the housing 12 may be set to a position closer to the end surface of the sensor chip/terminal supporting member 14 in the liquid sealing chamber 13 than a position of a flat portion opposed to the shield portion 20A of the shielding member 20 in a transverse cross-section of the diaphragm 52. Moreover, for example, as shown in Fig. 3B, an outer peripheral edge of a diaphragm 53 joined to the housing 12 may be formed so as to be connected to a flat portion 53B by a conical surface 53F continuing to the flat portion 53B opposed to the shield portion 20A of the shielding member 20 in the transverse cross-section of the diaphragm 53.

Thus, it is possible to make thinner a thickness of the housing 12 along the central axis of the sensor chip/terminal supporting member 14.

Note that, constituents in Fig. 3A and Fig. 3B that are the same as the constituents in the example shown in Fig. 1A will be denoted by the same reference signs and overlapping descriptions thereof will be omitted.

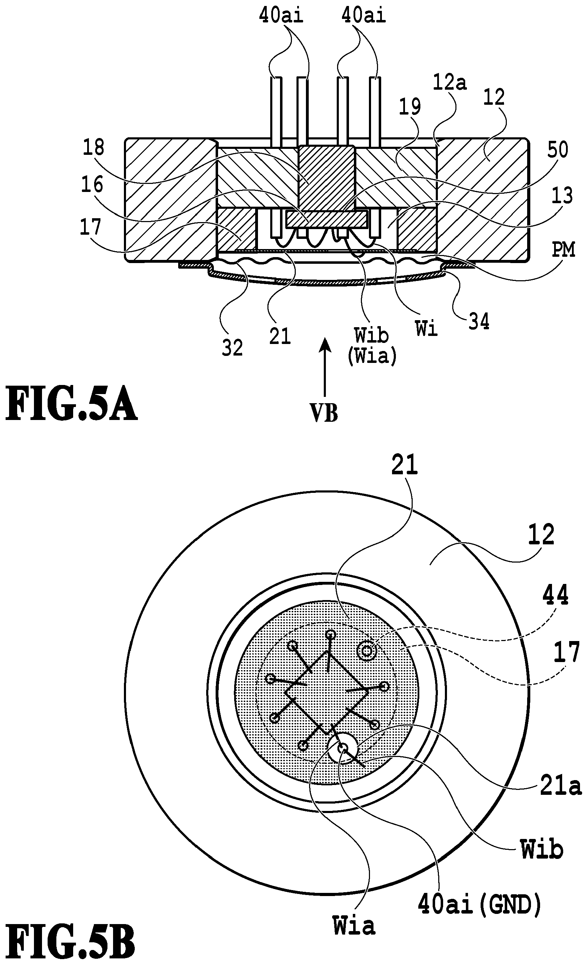

Fig. 5A and Fig. 5B show a main portion of another example of a sensor unit used in an example of the pressure sensor according to the present invention. Note that, constituents in Fig. 5A and Fig. 5B that are the same as the constituents in the examples shown in Fig. 1A and Fig. 1B will be denoted by the same reference signs and overlapping descriptions thereof will be omitted.

The sensor unit configured to detect a pressure inside the pressure chamber 4A formed between the above-described base plate 4 and the diaphragm 32 and to send a detection output signal comprises, as its main constituents: the metallic cylindrical housing 12; the metallic diaphragm 32 configured to isolate the pressure chamber 4A from the inner peripheral portion of the housing 12; the sensor chip 16 provided with the multiple pressure detection elements and the signal processing electronic circuit unit configured to process a signal from the pressure detection elements; a metallic chip mounting member 18 configured to support the sensor chip 16 by one end portion through the adhesive layer 50; the group of input-output terminals 40ai (i = 1 to 8) electrically connected to the sensor chip 16; and hermetic glass 19 configured to fix the group of input-output terminals 40ai and the oil filling pipe 44 (see Fig. 5B) between an outer peripheral surface of the chip mounting member 18 and the inner peripheral surface of the housing 12.

In the liquid sealing chamber 13 formed between the metallic diaphragm 32 and the sensor chip 16 and an end surface of the hermetic glass 19 opposed thereto, a shielding member 21 serving as the electric field blocking member is placed between the one end surface of the sensor chip 16 and the diaphragm 32. An outer peripheral edge of the shielding member 21 is joined to one end surface of a spacer member 17 to be described later. The shielding member 21 blocks an undesirable electric field in the signal processing electronic circuit unit of the sensor chip 16. The disc-shaped shielding member 21 is made of a conductive metallic material such as stainless steel, copper, and aluminum, for example. Note that, although the outer peripheral edge of the shielding member 21 is joined to the one end surface of the spacer member 17, it is not limited to this example and, for example, the outer peripheral edge of the shielding member 21 may be supported by inside of a concaved portion formed in one end portion of the spacer member 17.

As shown in Fig. 5B, the shielding member 21 is provided with a hole 21a in a position corresponding to any one of the group of input-output terminals 40ai that is the GND terminal (the terminal at zero (V)), for example. Thus, the pressure transfer medium PM (for example, a silicone oil) filled in the liquid sealing chamber 13 flows between the inner peripheral portion of the spacer member 17 covered with the shielding member 21 and a portion formed between the diaphragm 32 and the shielding member 21 through the hole 21a in accordance with displacement of the diaphragm 32.

The shielding member 21 is grounded through the bonding wire Wib connected to any one of the group of input-output terminals 40ai that is the GND terminal (the terminal at zero (V)), for example. The GND terminal (the terminal at zero (V)) is connected to the sensor chip 16 through the bonding wire Wia. Note that, a shape of the shielding member 21 is not limited to the disc shape and may be, for example, a strip shape as shown in Fig. 1B or an oval shape.

Additionally, other than the hole 21a, a hole that allows for communication between the inner peripheral surface of the spacer member 17 covered with the shielding member 21 and the portion formed between the diaphragm 32 and the shielding member 21 may be formed in the shielding member 21, or a communication route such as a groove may be formed inside the spacer member 17.

For example, the spacer member 17 is formed by an insulation material that has a lower thermal expansion rate than the pressure transfer medium PM such as, for example, resin material, rubber material, and ceramics. Thus, it is possible to make shallower the depth along the central axis of the group of input-output terminals 40ai in the liquid sealing chamber 13 formed in the inner peripheral portion of the housing 12 without the conductive plate placed inside the liquid sealing chamber 13 and configured to fix the shielding member as shown in PTL 1 and PTL 2. Therefore, it is possible to reduce an internal space volume of the liquid sealing chamber 13, that is, a sealed amount of the pressure transfer medium PM, and thus it is possible to improve the temperature characteristics in output by the pressure sensor.

Note that, in a case where a shape of a transverse cross-section of an internal space of the sensor device is a rectangular transverse cross-section as shown in Fig. 1 of PTL 3, for example, the above-described spacer member 17 is not necessarily a ring-shaped member, and the spacer member may have a rectangular-cylindrical transverse cross-section, for example.

Additionally, the shape of the spacer member may be an arbitrary shape as long as the shape of the spacer member is a shape that allows the spacer member not to interfere with the sensor chip 16, the bonding wire Wi, the diaphragm 32, and the like inside the liquid sealing chamber 13 and that also can fill an internal space volume of the liquid sealing chamber 13 as much as possible.

In placing the shielding member 21 inside the liquid sealing chamber 13, first, for example, after the group of input-output terminals 40ai and the sensor chip 16 are connected with each other through the bonding wire Wia, the spacer member 17 is then fixed by adhering, welding, or the like to the inside of the inner peripheral portion 12a of the housing 12, and also the shielding member 21 is joined to the one end surface of the spacer member 17; thus, the spacer member 17 and the shielding member 21 are integral with each other. Subsequently, the shielding member 21 is connected to the GND terminal (the terminal at zero (V)) through the bonding wire Wib.

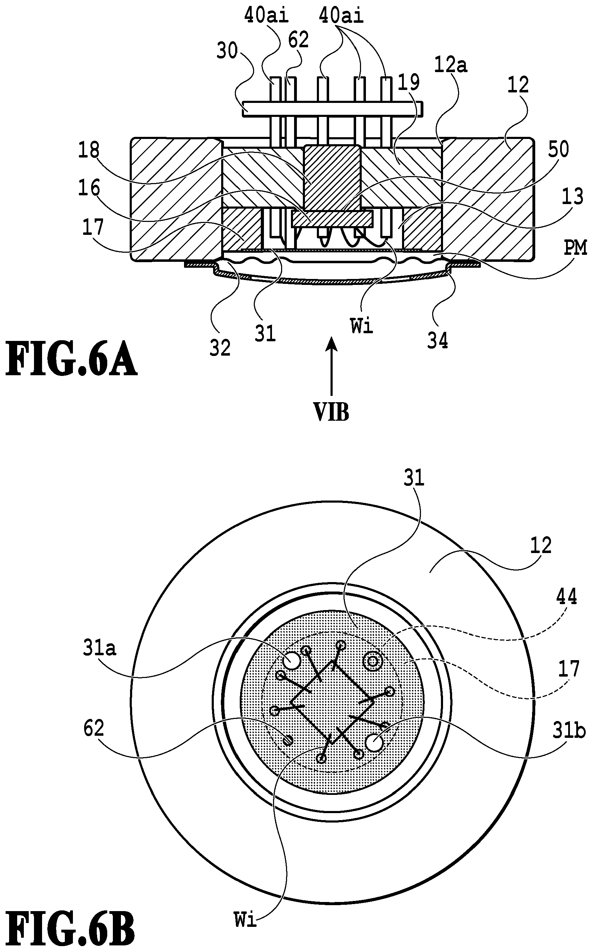

Fig. 6A and Fig. 6B show a main portion of yet another example of a sensor unit used in one example of the pressure sensor according to the present invention. Note that, constituents in Fig. 6A and Fig. 6B that are the same as the constituents in the example shown in Fig. 5A and Fig. 5B will be denoted by the same reference signs and overlapping descriptions thereof will be omitted.

In the example shown in Fig. 5A and Fig. 5B, the shielding member 21 is connected to the GND terminal (the terminal at zero (V)) through the bonding wire Wib; however, instead, in the example shown in Fig. 6A and Fig. 6B, a shielding member 31 is connected to the GND terminal (the terminal at zero (V)) by, for example, a relay terminal 62 connected to the GND terminal (the terminal at zero (V)) through a terminal connection substrate 30 and a conductive pattern of the terminal connection substrate 30.

The sensor unit configured to detect a pressure in the pressure chamber 4A formed between the above-described base plate 4 and diaphragm 32 and to send the detection output signal comprises, as its main constituents: the metallic cylindrical housing 12; the metallic diaphragm 32 configured to isolate the pressure chamber 4A from the inner peripheral portion of the housing 12; the sensor chip 16 provided with the multiple pressure detection elements and the signal processing electronic circuit unit configured to process a signal from the pressure detection elements; the metallic chip mounting member 18 configured to support the sensor chip 16 by the one end portion through the adhesive layer 50; the group of input-output terminals 40ai (i=1 to 8) electrically connected to the sensor chip 16; and the hermetic glass 19 configured to fix the group of input-output terminals 40ai and the oil filling pipe 44 (see Fig. 6B) between the outer peripheral surface of the chip mounting member 18 and the inner peripheral surface of the housing 12.

In the liquid sealing chamber 13 formed between the metallic diaphragm 32 and the sensor chip 16 and an end surface of the hermetic glass 19 opposed thereto, the shielding member 31 serving as the electric field blocking member is placed between the one end surface of the sensor chip 16 and the diaphragm 32. An outer peripheral edge of the shielding member 31 is joined to the one end surface of the spacer member 17. The shielding member 31 blocks an undesirable electric field in the signal processing electronic circuit unit of the sensor chip 16. The disc-shaped shielding member 31 is made of a conductive metallic material such as stainless steel, copper, and aluminum, for example. As shown in Fig. 6B, the shielding member 31 is provided with through-holes 31a and 31b in two portions opposed to each other. Thus, the pressure transfer medium PM (for example, a silicone oil) filled in the liquid sealing chamber 13 flows between the inner peripheral portion of the spacer member 17 covered with the shielding member 31 and a portion formed between the diaphragm 32 and the shielding member 31 through the through-holes 31a and 31b in accordance with displacement of the diaphragm 32. Note that, a shape of the shielding member 31 is not limited to a disc shape and may be, for example, a strip shape as shown in Fig. 1B or may be an oval shape. In such a case, the above-described through-holes are unnecessary. Additionally, instead of the through-holes 31a and 31b in the shielding member 31, a communication route that allows for communication between the inner peripheral portion of the spacer member 17 covered with the shielding member 31 and the portion formed between the diaphragm 32 and the shielding member 31 may be formed inside the spacer member 17.

The shielding member 31 is soldered and fixed to a lower end portion of the relay terminal 62. The relay terminal 62 is placed between adjacent two terminals out of the group of input-output terminals 40ai and is fixed by the hermetic glass 19. The relay terminal 62, the group of input-output terminals 40ai (i=1 to 8), and the oil filling pipe 44 are each fixed inside the hermetic glass 19 at regular intervals along a circumferential direction of the hermetic glass 19.

An upper end portion of the relay terminal 62 is soldered and fixed to one end portion of the conductive pattern of the terminal connection substrate 30. The other end portion of the conductive pattern of the terminal connection substrate 30 is connected to any one of the group of input-output terminals 40ai that is the GND terminal (the terminal at zero (V)), for example. The terminal connection substrate 30 includes a hole through which the upper end portion of the relay terminal 62 passes and multiple holes through which the group of input-output terminals 40ai and the oil filling pipe 44 pass at given intervals along the circumferential direction. On the terminal connection substrate 30, the conductive pattern is formed between a peripheral edge of the hole through which the upper end portion of the relay terminal 62 passes and a peripheral edge of the hole through which the GND terminal (the terminal at zero (V)) passes.

In placing the shielding member 31 inside the liquid sealing chamber 13, first, for example, after the group of input-output terminals 40ai and the sensor chip 16 are connected to each other through the bonding wire Wi, the spacer member 17 is then fixed by adhering, welding, or the like to the inside of the inner peripheral portion 12a of the housing 12, and also the shielding member 31 is joined to the one end surface of the spacer member 17; thereafter, one end portions of the shielding member 31 and the conductive pattern of the terminal connection substrate 30 are soldered and fixed to the two end portions of the relay terminal 62, respectively.

Thus, the shielding member 31 has the same potential as the potential of the signal processing electronic circuit mounted in the sensor chip 16 through the relay terminal 62 and the conductive pattern of the terminal connection substrate 30. Accordingly, with the shielding member 31 having the same potential as the potential of the sensor chip 16 being placed between the diaphragm 32 and the signal processing electronic circuit unit of the sensor chip 16, an electric field acting on the sensor chip 16 that is generated by a potential difference between the diaphragm 32 having the same potential as that of the primary side power source (not illustrated) of the unit and the control circuit (not illustrated) side is blocked by the shielding member 31. Additionally, since the potential of the shielding member 31 and the potential of the sensor chip 16 are the same potentials, no electric field is generated therebetween. Thus, a potential difference that occurs between the sensor chip 16 and the diaphragm 32 does not act on the sensor chip 16, and therefore it is possible to prevent the effect on the signal processing electronic circuit in the sensor chip 16.

Moreover, as with the above-described example, the outer peripheral edge of the shielding member 31 is directly joined to the one end surface of the spacer member 17 without the conductive plate also in the configuration of the present example. Since there is no conductive plate placed inside the liquid sealing chamber 13 and configured to fix the shielding member as shown in PTL 1 and PTL 2, it is possible to make shallower the depth along the central axis of the group of input-output terminals 40ai in the liquid sealing chamber 13 formed in the inner peripheral portion of the housing 12. Therefore, it is possible to reduce an internal space volume of the liquid sealing chamber 13, that is, a sealed amount of the pressure transfer medium PM, and thus it is possible to improve the temperature characteristics in output by the pressure sensor.

## Claims

1. A pressure sensor, comprising:
a sensor unit that includes a sensor chip configured to detect a pressure and to send a detection output signal, a diaphragm configured to partition a liquid sealing chamber in which the sensor chip is placed from a pressure chamber opposed to the liquid sealing chamber, a group of input-output terminals electrically connected to the sensor chip through a wiring member, and a sensor chip/terminal supporting member provided with a chip mounting portion in which the sensor chip is placed and configured to support the sensor chip and the group of input-output terminals; and
an electric field blocking member that is provided with a shield portion placed between one end surface of the sensor chip in the liquid sealing chamber and the diaphragm and positioned directly above the sensor chip and a fixed end portion continuing to the shield portion and fixed to the sensor chip/terminal supporting member and that is configured to block an electric field acting on the sensor chip, wherein
in the shield portion of the electric field blocking member, at least one end portion along an array direction of a connection end of a wiring member connected to the sensor chip is placed in a position closer to a central portion of the sensor chip than a position directly above the wiring member.

2. A pressure sensor, comprising:
a sensor unit that includes a sensor chip configured to detect a pressure and to send a detection output signal, a diaphragm configured to partition a liquid sealing chamber in which the sensor chip is placed from a pressure chamber opposed to the liquid sealing chamber, a group of input-output terminals electrically connected to the sensor chip, and a sensor chip/terminal supporting member provided with a chip mounting portion in which the sensor chip is placed and configured to support the sensor chip and the group of input-output terminals; and
an electric field blocking member that is provided with a shield portion placed between one end surface of the sensor chip in the liquid sealing chamber and the diaphragm and positioned directly above the sensor chip and a fixed end portion continuing to the shield portion and fixed to the sensor chip/terminal supporting member and that is configured to block an electric field acting on the sensor chip, wherein
the diaphragm is provided with a portion opposed to the shield portion of the electric field blocking member and is formed such that concavity and convexity formed concentrically to continue to two ends of the portion opposed to the shield portion protrude toward the sensor chip/terminal supporting member.

3. A pressure sensor, comprising:
a sensor unit that includes a sensor chip configured to detect a pressure and to send a detection output signal, a diaphragm configured to partition a liquid sealing chamber in which the sensor chip is placed from a pressure chamber opposed to the liquid sealing chamber, a group of input-output terminals electrically connected to the sensor chip, and a sensor chip/terminal supporting member provided with a chip mounting portion in which the sensor chip is placed and configured to support the sensor chip and the group of input-output terminals; and
an electric field blocking member that is provided with a shield portion placed between one end surface of the sensor chip in the liquid sealing chamber and the diaphragm and positioned directly above the sensor chip and a fixed end portion continuing to the shield portion and fixed to the sensor chip/terminal supporting member and that is configured to block an electric field acting on the sensor chip, wherein
a position of an outer edge of the diaphragm is closer to an end portion of the sensor chip/terminal supporting member inside the liquid sealing chamber than a position of a portion opposed to one end surface of the sensor chip.

4. The pressure sensor according to any one of claims 1 to 3, wherein
the chip mounting portion is formed into a concaved shape at an end portion of the sensor chip/terminal supporting member.

5. The pressure sensor according to any one of claims 1 to 3, wherein
a conductive pattern is formed on an end surface of the sensor chip/terminal supporting member, the group of input-output terminals is electrically connected with the conductive pattern, and each fixed end portion of the electric field blocking member is fixed to the conductive pattern.

6. A pressure sensor, comprising:
a sensor unit that includes a sensor chip configured to detect a pressure and to send a detection output signal, a diaphragm configured to partition a liquid sealing chamber in which the sensor chip is placed from a pressure chamber opposed to the liquid sealing chamber, and a group of input-output terminals electrically connected to the sensor chip;
a spacer member placed so as to surround the sensor chip in the liquid sealing chamber; and
an electric field blocking member that is placed between one end surface of the sensor chip in the liquid sealing chamber and the diaphragm by being supported by the spacer member and that is configured to block an electric field acting on the sensor chip, wherein
a potential of the electric field blocking member is the same potential as a potential of any one of input-output terminals out of the group of input-output terminals.

7. The pressure sensor according to claim 6, wherein
the electric field blocking member is provided with at least one opening that allows for communication between a portion formed between the diaphragm and the electric field blocking member in the liquid sealing chamber and a portion surrounded by the electric field blocking member in the inner peripheral portion of the spacer member, or between an inner side of the spacer member and a portion formed between the diaphragm and the electric field blocking member.
